# FASCICULE DE BREVET EUROPEEN

(11) **EP 1 721 519 B1**
(45) Date de publication et mention de la délivrance du brevet: **05.09.2007**
(21) Numéro de dépôt: 06075954.5
(22) Date de dépôt: 27.04.2006
(51) Int. Cl.: A01G 3/04, A01D 34/66

(54) **Boitier modulaire profilé pour coupe de végétaux**
Konturiertes Modulgehaüse zum Schneiden von Pflanzen
Contoured modular casing for cutting plants

(30) Priorité: 09.05.2005 FR 0504713
(43) Date de publication de la demande: 15.11.2006
(73) Titulaire: Collard, Michel, 51150 Bouzy (FR)
(72) Inventeur: Collard, Michel, 51150 Bouzy (FR)
(74) Mandataire: Gérardin, Robert Jean René

(56) Documents cités:
- EP-A- 0 230 156
- FR-A- 2 787 966
- FR-A- 2 832 024

## Description

L'invention concerne un boîtier modulaire profilé pour la coupe de végétaux, destiné, en particulier, à équiper les rogneuses de vigne.

Il est connu d'utiliser, en viticulture, des rogneuses mettant en oeuvre des boîtiers modulaires constitués principalement d'éléments de coupe se fixant les uns aux autres et s'entraînant mutuellement ; chaque élément de coupe étant constitué d'un corps profilé sur lequel est fixé un arbre, équipé, à l'une de ses extrémités, d'une lame coupante et, à l'autre extrémité, d'une poulie double permettant l'entraînement, de proche en proche, de l'ensemble des têtes de coupe d'un même boîtier à partir d'un unique moteur hydraulique équipant l'un des éléments de coupe. Ces boîtiers modulaires sont réalisés à partir de corps profilés en alliage léger, de section appropriée, réalisés en grande longueur, qui sont tronçonnés ensuite à une longueur correspondant au niveau de modularité recherché ; l'assemblage des éléments de coupe est obtenu par l'intermédiaire de pièces de section trapézoïdale, fixées par vis dans des rainures de section correspondante : un tel dispositif est décrit dans le brevet européen n° 0.230.156.

On connaît aussi, par le brevet français n° 2.787.966, un lamier d'élagage modulaire, destiné à équiper un dispositif d'élagage d'arbres et d'arbustes en vue d'obtenir une forme architecturée de ceux-ci. Ce lamier d'élagage comporte, pour l'essentiel, un module de base, constitué d'un corps profilé, dont le fond est muni d'orifices et d'ouvertures permettant le passage des outils, et un couvercle profilé muni d'une ouverture de passage de l'arbre d'entraînement du porte-outil correspondant et d'orifices de fixation de celui-ci contre ledit couvercle, et des modules additionnels, de même conception et de même section que le module de base, solidarisés et maintenus dans l'alignement de celui-ci par des pièces de liaison vissées de part et d'autre du plan de joints des modules qu'elles chevauchent : les couvercles des modules s'emboîtant dans les bords de ceux-ci par l'intermédiaire de nervures latérales. Comme dans le cas brièvement analysé ci-dessus, les corps profilés et leurs couvercles sont obtenus par tronçonnage de profilés métalliques de section et de dimensions correspondantes, préalablement réalisés en grande longueur.

Dans un cas comme dans l'autre, mais plus particulièrement dans le premier cas se rapportant au taillage latéral et à l'écimage simultané de rangs de vigne complets, des problèmes de pénétration des rogneuses dans la végétation, d'évacuation immédiate des rameaux coupés et de protection de la transmission aux chocs se posent, compte tenu notamment des parties saillantes, des aspérités, ainsi que de la forme même des boîtiers et de la nature du matériau utilisé pour leur fabrication en vue de leur allégement (alliage léger).

La présente invention a pour but de remédier à ces inconvénients. Cette invention, telle qu'elle est caractérisée dans les revendications, résout le problème consistant à créer un boîtier modulaire profilé pour rogneuses de végétaux, avec lequel, d'une part, la pénétration des rogneuses dans la végétation soit facilitée, ainsi que l'évacuation des rameaux coupés, et, d'autre part, une bonne rigidité de la transmission soit obtenue et conservée malgré les chocs.

Les avantages obtenus, grâce à cette invention, consistent principalement en ce que le boîtier modulaire profilé dont il s'agit présente une rigidité suffisante pour protéger la transmission des chocs inhérents au travail, une forme aérodynamique lui facilitant la pénétration dans la végétation, une finition extérieure lisse permettant l'évacuation directe des rameaux coupés et une compacité optimale, assurant une utilisation dans les meilleures conditions de sécurité, d'efficacité et de rendement, ainsi qu'une résistance accrue du bord d'attaque aux chocs au cours du travail, notamment contre les piquets.

D'autres caractéristiques et avantages apparaîtront dans la description qui va suivre d'un boîtier modulaire profilé à deux éléments pour rogneuses de vigne, réalisé selon l'invention, donné à titre d'exemple non limitatif, au regard des dessins annexés, sur lesquels :
- la figure 1 représente une vue de dessus, en perspective, du boîtier modulaire profilé à deux éléments, côté moteur d'entraînement,
- la figure 2 représente une vue de dessous, en perspective, du boîtier modulaire profilé selon la figure 1, vu côté têtes de coupe,
- la figure 3 représente une coupe selon le plan XX', vue suivant f du boîtier modulaire profilé selon la figure 1,
- la figure 4 représente une vue de dessus, en perspective, partiellement éclatée, du boîtier modulaire profilé selon la figure 1, couvercle et bord d'attaque retirés,
- la figure 5 représente une vue de dessous, en perspective, partiellement éclatée, du boîtier modulaire profilé selon la figure 2, couvercle et bord d'attaque retirés.

Ces figures représentent un boîtier modulaire profilé **1** pour le rognage de la vigne, comprenant deux éléments de coupe **10** et **20** constitués, respectivement, d'un corps profilé en U **11** et **21,** dont l'un **11,** plus long que l'autre, est équipé de deux têtes de coupe **111** et **112,** dont l'une **111** est entraînée par un moteur hydraulique **30** par l'intermédiaire d'un arbre **31** muni d'une poulie double **32,** et dont l'autre **112** est entraînée par l'intermédiaire d'un arbre **33** muni d'une poulie double **34** reliée à celle **32** équipant l'arbre **31** par une courroie de liaison **35 ;** l'autre corps profilé **21** étant, dans cet exemple de réalisation, équipé d'une seule tête de coupe **211,** entraînée par un arbre **33** muni d'une poulie double **36** reliée à la poulie double **34** de l'élément de coupe **10** par une courroie de liaison **37.**

Les deux éléments de coupe **10, 20** sont reliés entre eux par des clavettes **40,** reliées aux corps profilés **11** et **21** par des vis **41,** et par les éléments **61** et **62** d'un couvercle profilé **60,** fixé, par vis à tête noyée **63,** de part et d'autre de la platine **38** de fixation du moteur hydraulique **30,** sur l'extrémité des ailes du corps profilé **11** de l'élément de coupe **10,** et équipés, de chaque côté, respectivement, d'un profilé bombé **50** à rainure **51** de logement de la tête des vis **41** de fixation des clavettes **40** de liaison des corps profilés **11** et **21 ;** ledit profilé **50** se fixant par encliquetage dans les rainures **113** et **213,** de section appropriée, réalisées dans le côté amont **114, 214** des corps profilés **11** et **21** et du côté aval **115** et **215** d'un déflecteur 70 de végétation se fixant contre les corps profilés **11** et **21** par l'intermédiaire de boulons **71,** dont la tête est introduite dans des rainures en queue d'aronde **116** et **216,** réalisées dans les côtés aval **115** et **215** des corps profilés **11** et **21,** et de consoles **80** et **81** se fixant par vis contre les extrémités libres **117** et **217** des corps profilés **11** et **21.**

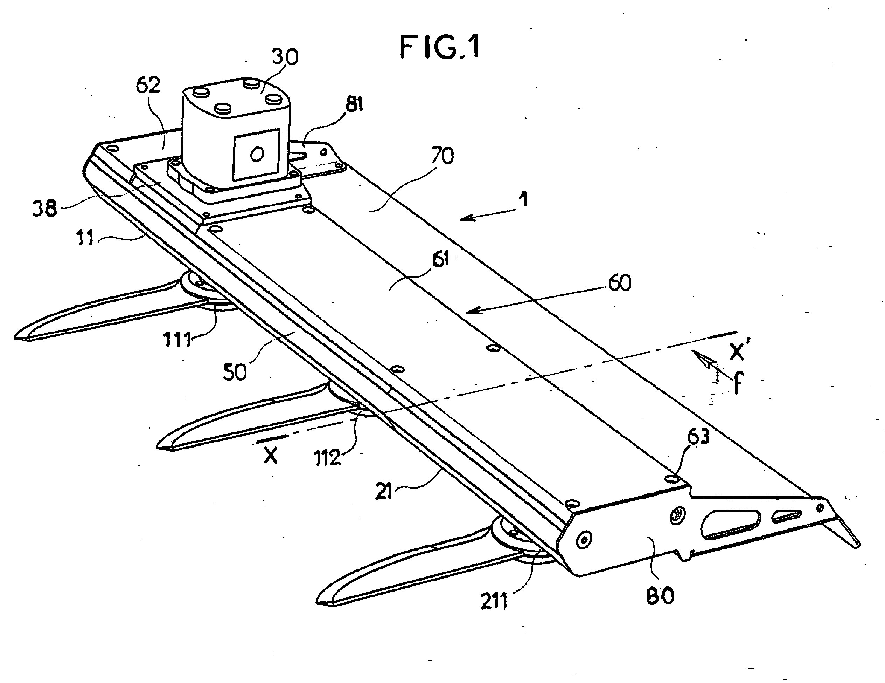

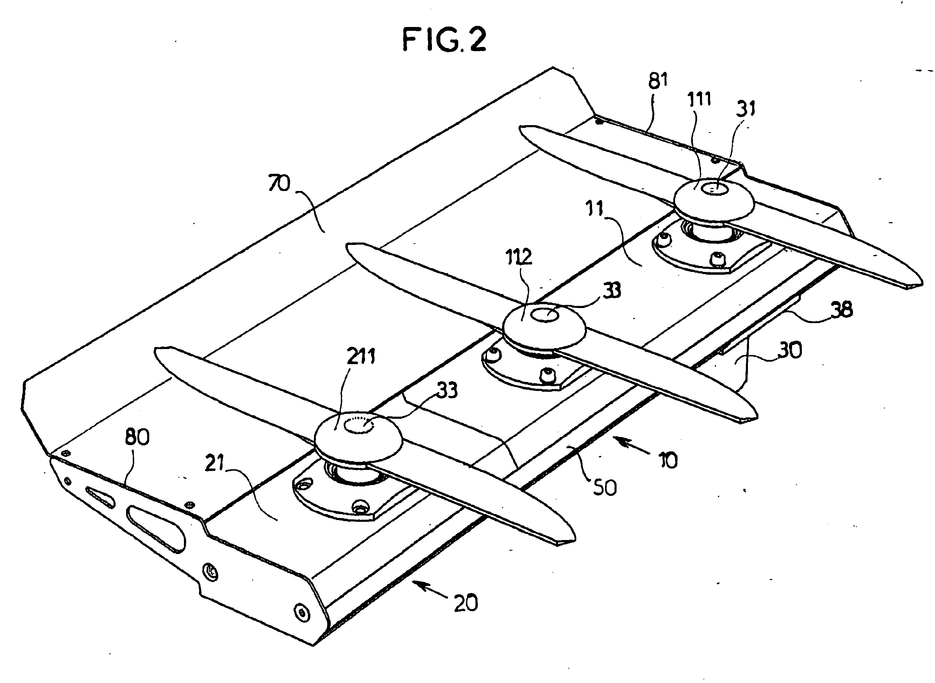

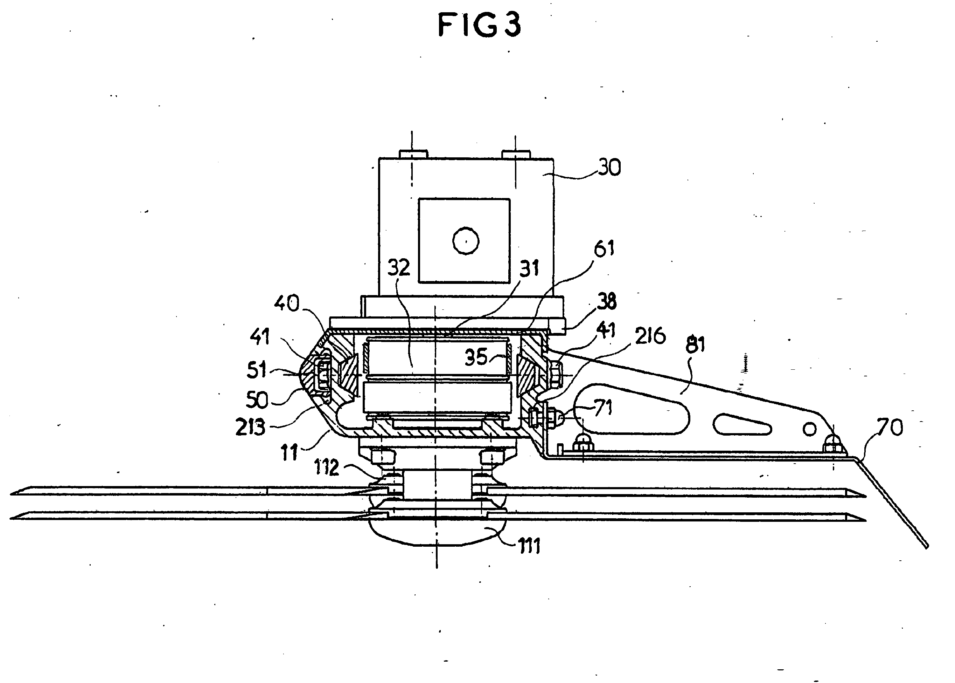

En examinant maintenant plus en détail les figures 1 à 3, on remarque que le boîtier modulaire profilé **1** ainsi réalisé présente un profil aérodynamique, facilitant sa pénétration dans la végétation, due notamment à la section donnée aux corps profilés **11** et **21,** et, tout particulièrement, à la présence du profilé bombé **50,** en matière plastique, formant bord d'attaque, incrusté dans le côté amont desdits corps profilés **11** et **21,** qui, de surcroît, masque la tête des vis **41** de fixation des clavettes **40** de liaison des deux éléments de coupe **10** et **20,** qui élimine ainsi le risque d'accrochage de la végétation, tout en facilitant son glissement contre les corps profilés **11** et **21** et contre le couvercle profilé **60** fermant la partie creuse desdits corps **11** et **21,** dont les bords ont été conçus pour s'emboîter sur l'extrémité extérieure des ailes des profilés en U **11** et **21,** avec engagement total du bord amont dudit couvercle profilé **60** dans un fraisage de profondeur appropriée, réalisé sur toute la longueur des corps profilés **11** et **21,** ce qui facilite, là aussi, le glissement de la végétation, sans risque d'engagement de rameaux entre le couvercle profilé **60,** et les bords des corps profilés **11** et **21.** On remarquera aussi que ce couvercle profilé **60,** compte tenu de sa section et de la longueur de son élément principal **61,** contribue à la solidarisation des deux éléments de coupe **10** et **20** et au renforcement de la rigidité du boîtier modulaire profilé **1.**

On remarque aussi, sur les mêmes figures, que le déflecteur de végétation **70,** compte tenu de sa position et de sa forme, contribue grandement, lui aussi, à l'écoulement de la végétation et à son maintien dans le plan de coupe pendant la taille.

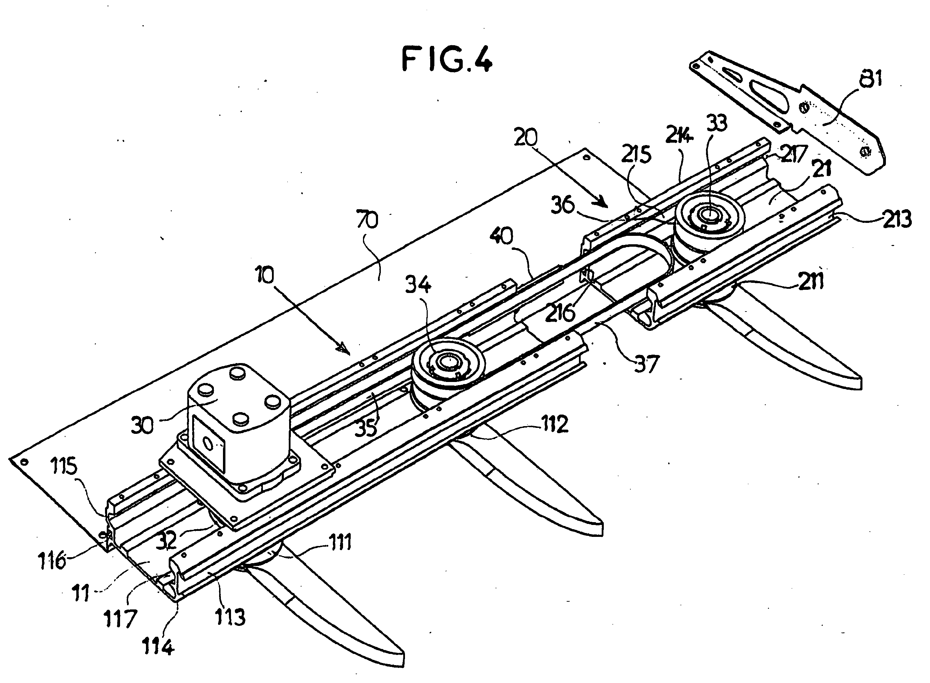

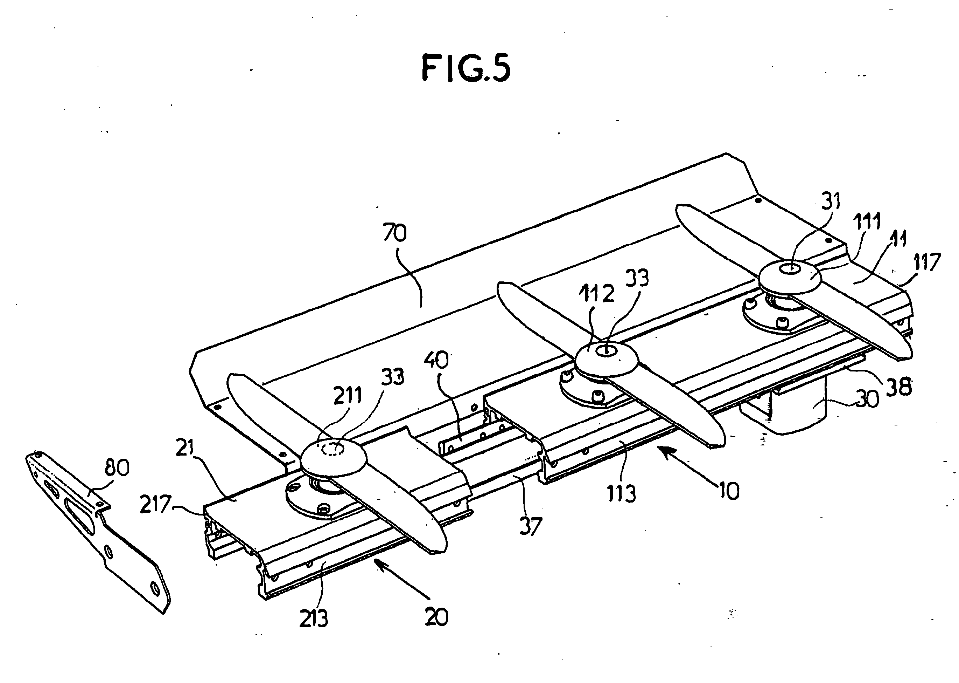

En examinant maintenant les figures 4 et 5, on remarque que, pour des raisons de simplification et de rigidité, le module de base, constitué de l'élément de coupe **10,** comporte deux têtes de coupe **111** et **112,** dont l'une **111** est associée au moteur hydraulique **30** d'entraînement de l'ensemble des modules constituant un boîtier modulaire profilé, et c'est donc l'adjonction d'un ou de plusieurs autres modules qui permet de réaliser, par exemple, un boîtier modulaire profilé de même conception, mais comportant une ou plusieurs têtes de coupe ; l'entraînement de celles-ci étant obtenu de proche en proche, par l'intermédiaire des poulies doubles **36,** dont l'arbre **33** d'entraînement de la tête de coupe **211** est équipé, et de courroies **37.**

## Revendications

1. Boîtier modulaire profilé pour la coupe de végétaux réalisé en plusieurs éléments de coupe **(10,20)** se fixant longitudinalement entre eux en vue de leur entraînement mutuel, chaque élément de coupe **(10,20)** étant constitué principalement d'un corps profilé en U **(11,21)** sur lequel et au travers duquel est fixé, par l'intermédiaire d'un palier amovible, un arbre **(31)** équipé, à l'une de ses extrémités, d'au moins une tête de coupe **(111)** et, à l'autre extrémité, d'une poulie double **(32)** permettant l'entraînement de proche en proche par l'intermédiaire de courroies **(37)** de l'ensemble des têtes de coupe **(112,211)** à partir d'au moins un moteur **(30)** se fixant sur l'extrémité des ailes du corps profilé en U **(11,21)** de l'un des éléments de coupe ; chaque corps profilé en U **(11)** étant fermé par un couvercle **(60)** se fixant, lui aussi, sur l'extrémité de ses ailes et étant solidarisé au corps profilé voisin **(21)** par des pièces de liaison **(40)** , fixées par vis **(41)** dans des rainures de même section ménagées dans la face interne de ses ailes, **caractérisé en ce que** tous les éléments de coupe **(10, 20)** d'un même boîtier modulaire profilé **(1)** sont réunis par un même couvercle profilé **(60),** par un déflecteur de végétation **(70)** formant bord de fuite et par un profil bombé formant bord d'attaque, situés respectivement sur le côté aval et sur le côté amont des corps profilés en U **(11, 21), en ce que** le moteur d'entraînement **(30)** se fixe sur les ailes d'un des corps profilés en U **(11),** par l'intermédiaire d'une platine **(38).**

2. Boîtier modulaire profilé selon la revendication 1, **caractérisé en ce que** le couvercle profilé **(60)** des corps profilés en U **(11, 21)** se fixe sur ceux-ci à l'aide de moyens **(63)** interdisant tout accrochage de la végétation.

3. Boîtier modulaire profilé selon la revendication 1, **caractérisé en ce que** le profil bombé formant bord d'attaque comporte un profilé bombé **(50)** fixé dans une rainure **(113, 213)** de section appropriée, ménagée dans le côté amont des corps profilés en U **(11, 21).**

4. Boîtier modulaire profilé selon la revendication 3, **caractérisé en ce que** le profilé bombé **(50)** évidé pour permettre le logement et la couverture des têtes de vis **(41)** de solidarisation entre eux des corps profilés en U **(11, 21).**

5. Boîtier modulaire profilé selon la revendication 1, **caractérisé en ce que** le déflecteur de végétation **(70)** formant bord de fuite se fixe au côté aval des corps profilés en **U (11, 21)** par l'intermédiaire de boulons **(71)** à tête engagée dans une rainure en queue d'aronde **(116, 216),** réalisée, pour cela, dans ledit côté aval, et d'au moins deux consoles **(80, 81)** de fermeture fixées aux corps profilés en U d'extrémité de l'ensemble.

## Claims

1. A contoured modular casing for cutting plants comprising a plurality of cutting elements **(10, 20)** fixed longitudinally to one another such that they can be driven together, each cutting element **(10, 20)** being composed principally of a U-shaped contoured body **(11, 21)** to and through which is fixed by means of a moveable bearing a shaft **(31)** provided at one of its ends with at least one cutting head **(111)** and at the other end with a double pulley **(32)** permitting the entirety of the cutting heads **(112, 211)** to be driven step-by-step by means of belts **(37)** by at least one motor **(30)** fixed to the end of the wings of the U-shaped contoured body **(11, 21)** of one of the cutting elements, each U-shaped contoured body **(11)** being closed by a cover **(60)** which is in turn fixed to the end of its wings and joined to the neighbouring contoured body **(21)** by connecting parts **(40)** which are fixed by screw **(41)** in grooves of the same cross-section provided in the inner face of its wings,
**characterised in that**
all the cutting elements **(10, 20)** of one contoured modular casing **(1)** are joined together by one contoured cover **(60),** by a vegetation deflector **(70)** forming a trailing edge and by a curved contoured section forming a leading edge which are situated on the upstream and the downstream sides of the U-shaped contoured bodies **(11, 21)** respectively, the drive motor **(30)** being fixed to the wings of one of the U-shaped contoured bodies **(11)** by means of a plate **(38).**

2. A contoured modular casing in accordance with claim 1,
**characterised in that**
the contoured cover **(60)** of the U-shaped contoured bodies **(11, 21)** is fixed thereto by means **(63)** which prevent any vegetation from catching.

3. A contoured modular casing in accordance with claim 1,
**characterised in that**
the curved contoured section forming the leading edge comprises a curved contoured section **(50)** fixed in a groove **(113, 213)** of appropriate cross-section which is provided in the downstream side of the U-shaped contoured bodies **(11, 21).**

4. A contoured modular casing in accordance with claim 3,
**characterised in that**
the curved contoured section **(50)** is hollowed out to enable it to accommodate and to cover the screw heads **(41)** which join the U-shaped contoured bodies **(11, 21)** together.

5. A contoured modular casing in accordance with claim 1,
**characterised in that**
the vegetation deflector **(70)** forming the trailing edge is fixed to the downstream side of the U-shaped contoured bodies **(11, 21)** by means of cap screws **(71)** engaged in a dovetailed groove **(116, 216)** provided for this purpose in said downstream side and has at least two closing brackets **(80, 81)** fixed to the U-shaped contoured bodies at the ends of the arrangement.

## Patentansprüche

1. Profiliertes Gehäuse-Modul zum Schneiden von Pflanzen, bestehend aus einer Vielzahl von Schneidelementen **(10, 20),** die der Länge nach untereinander in Richtung ihrer wechselseitigen Mitnahme befestigt sind, wobei jedes Schneidelement **(10,20)** grundsätzlich aus einem U-Profilkörper **(11,21)** besteht, auf dem und über welches durch Zwischenschaltung eines Loslagers eine Welle **(31)** befestigt ist, die an einem Ende mit zumindest einem Schneidkopf **(111)** und am anderen Ende mit einer Doppelrolle **(32)** ausgestattet ist, die über Triebriemen **(37)** von zumindest einem Motor **(30),** montiert am Ende der Flügel der U-Profilkörper **(11,21)** eines der Schneidelemente, ein schrittweises Mitnehmen der Schneidköpfe **(112, 211)** ermöglicht; jeder U-Profilkörper **(11)** wird durch eine Abdeckhaube **(60)** geschlossen, die ebenfalls am Ende seiner Flügel montiert ist und die mit den benachbarten Profilkörpern **(21)** durch Verbindungsstücke **(40)** verbunden ist, die mittels Schrauben **(41)** in den Nuten desselben Bereiches, ausgespart in den Innenflächen seiner Flügel, befestigt werden, **dadurch gekennzeichnet, daß** alle Schneidelemente **(10,20)** eines selben profilierten Gehäuse-Moduls **(1)** mittels ein und derselben profilierten Abdeckhaube **(60),** eines den Rand des Durchlasses bildenden Vegetationsdeflektors **(70)** sowie eines den Rand des Eingriffs bildenden gewölbten Profils verbunden sind, die auf der stromabwärts gelegenen Seite und auf der stromaufwärts gelegenen Seite der U-Profilkörper **(11,21)** angeordnet sind, wobei der Mitnehmermotor **(30)** an den Flügeln eines der U-Profilkörper **(11)** mittels Einsatz einer Platine (Tragplatte) **(38)** montiert ist.

2. Profiliertes Gehäuse-Modul gemäß Anspruch 1, **dadurch gekennzeichnet, daß** die profilierte Abdeckhaube **(60)** der U-Profilkörper **(11,21)** mit Hilfe von Mitteln **(63)** befestigt wird, die ein Verfangen der Vegetation verhindern.

3. Profiliertes Gehäuse-Modul gemäß Anspruch 1, **dadurch gekennzeichnet, daß** das den Eingriffsrand bildende gewölbte Profil **(50)** aus einem gewölbten Profil besteht, das in eine Nut **(113, 213)** des entsprechenden Bereiches, die in der stromaufwärts gerichteten Seite der U-Profilkörper **(11,21)** ausgespart ist, befestigt wird.

4. Profiliertes Gehäuse-Modul gemäß Anspruch 3 **dadurch gekennzeichnet, daß** das gewölbte Profil **(50)** hohl (ausgespart) ist, um die Aufnahme und die Abdeckung der Schraubenköpfe **(41)** der Verbindung zwischen den U-Profilkörpern **(11,21)** zu ermöglichen.

5. Profiliertes Gehäuse-Modul gemäß Anspruch 1, **dadurch gekennzeichnet, daß** der den Rand des Durchlass bildende Vegetationsdeflektor **(70)** auf der stromabwärts gerichteten Seite der U-Profilkörper **(11,21)** durch Einsatz von Kopfschrauben **(71),** in Schwalbenschwänzen **(116,216)** in die Nut eingelassen und zu diesem Zweck auf der genannten stromabwärts gerichteten Seite so ausgeführt, sowie mittels zwei Abschlußkonsolen **(80, 81),** die auf den U-Profilkörpern am Ende des Moduls montiert sind, befestigt ist.
